# EUROPÄISCHE PATENTSCHRIFT

(11) **EP 1 398 178 B1**
(45) Veröffentlichungstag und Bekanntmachung des Hinweises auf die Patenterteilung: **22.10.2008**
(21) Anmeldenummer: 03466015.9
(22) Anmeldetag: 05.09.2003
(51) Int. Cl.: B60B 7/06, B60B 7/08, B60B 7/02

(54) **Radzierkappe**
Wheel cover
Enjoliveur de roue

(30) Priorität: 11.09.2002 CZ 20023045
(43) Veröffentlichungstag der Anmeldung: 17.03.2004
(73) Patentinhaber: Skoda Auto a.s., 293 60 Mlada Boleslav (CZ)
(72) Erfinder: Babak, Jan, 293 01 Mlada Boleslav (CZ)

(56) Entgegenhaltungen:
- DE-A1- 3 704 384
- GB-A- 2 091 652
- GB-A- 2 304 315
- US-A- 4 707 035
- US-A- 5 222 785
- US-A- 5 249 845
- US-A- 5 297 854

## Beschreibung

### Bereich der Technik

Die Erfindung betrifft eine Radzierkappe mit Zentrierelementen. Die Radzierkappe ist für Wagenräder vorgesehen, die an den Radnaben mit Bolzen befestigt sind, deren Köpfe achsweise ausgespart sind. Derartige Radzierkappen sind allgemein bekannt.

### Stand der Technik

Auf die Metallradscheiben werden Kappen gesetzt. Sie sind abnehmbar, meist aus Kunststoff, und dienen sowohl zum Radschutz als auch zur Verzierung. Der Einfachheit halber werden sie in dem vorliegenden Dokument als Radzierkappen bezeichnet.

Die Radzierkappe benötigt nicht nur eine federnde axiale Befestigung gegenüber der Radschüssel. Die saubere Auswuchtung des Rades fordert auch die Zentrierung der Radkappe gegenüber dem Radmittelpunkt.

Die genannten Funktionen werden bei den gängigen Kappenmodellen beispielsweise durch einen Set flacher Formfedern gewährleistet. Die Flachfedern, auf der Radzierkappe festgemacht, gleiten zentrierend in die Formlöcher der Radschüssel ein.

Eine andere Ausführung einer Radzierkappe basiert auf der Verwendung von Drahtformfedern im Käfig der Schutzkappe. Beim Eindrücken springt die Feder in den Freiraum zwischen integrierten Unterlegescheiben der Radbolzen und den Kalotten der Radschüssel, welche ebenso regelmäßig und einmittelnd auf der Radscheibe verteilt sind.

In den beschriebenen Fällen ist jedoch die Axiallage der Kappe und der Radschüssel woanders fixiert als im optisch kritischen Bereich der Felge und des Kappenumkreises. Dies verhütet die unerwünschte Fugenbildung auf dieser Stelle infolge ziemlich hoher Axialtoleranz der elastischen Kappenmembrane nicht.

Darum sind die Fixier- und Zentrierfunktionen bei anderen gängigen Kappenausführungen auf extra dafür vorgesehene separate Elementen übertragen. Die axiale Befestigung wird in der Regel durch radial federnde Segmentfinger sichergestellt, die mittels einer unterstützenden Ringfeder in die Umfangsnute der Felge reinspringen. Die radiale Zentrierung ist woanders mithilfe eines Sonderstücks erreicht.

Das kann beispielsweise ein Mittelrohr sein, frontal mit der Radzierkappe verbunden, dessen lichte Weite an der Restbreite des herausstehenden Zentrierteils der Radnabe anliegt. Dieses ist jedoch meistens zu kurz, um die Axialtoleranz der Lage der Radzierkappe gegenüber der Radschüssel in nötigem Maß zu decken.

Als ein alternatives Hilfszentriermittel wird manchmal aus diesem Grunde eine Reihe von kleineren Stutzen oder die Kombination von beiden beschriebenen Ausführungen verwendet, die ebenfalls an die Kappenscheibe angekoppelt sind. In diesem Konzept berührt das Zentriermittel teilweise den Kopfdurchmesser des Sechskantenkopfes am Radbolzen. Weil die Köpfe hoch genug sind, ist die achsweise Zentrierung der Radzierkappe hinreichend flexibel und damit auch gegen eventuelle Kappendurchbiegung nicht mehr empfindlich.

Eine solche Ausführung, auf den einheitlichen Durchmesser der Radbolzen und deren Kopf-Sechskant angewiesen, hat aber einen anderen Nachteil. Auf einem mit solcher Radzierkappe bestückten Rad ist es nicht möglich neben den normalen auch Bolzen mit größerem Kopfdurchmesser wie z.B. Sicherheitsradbolzen zu montieren. Es kommt allerdings bei dem saisonbedingten Reifenwechsel häufig vor, dass die Winterreifen stets auf besonderen Stahlfelgen mit Radzierkappen montiert werden, während der Wagen mit Alu-Blechrädern bestückt ist, in deren Zusammenbau Sicherheitsradbolzen schon eingeschlossen sind. In diesem Fall, bei beschriebener Zentrierungsvariante, bedarf man zusätzlich sowohl der Radbolzen normaler Ausführung als auch einer Aufbewahrungsstelle für im Winter abgestellte Sicherheitsradbolzen.

Die herkömmliche Variante der Zentrierung der Kappe beim Bolzenkopf hat im Falle der Räder mit hoher thermischer Belastung noch einen weiteren Nachteil - infolge massiver Wärmezufuhr von der Bremsscheibe kommt es zur Erweichung des Plastikmaterials im Bereich der Kontaktstellen.

Falls die Radzierkappe kein Rückhaltsystem besitzt, welches die Teildrehung der Radzierkappe am Umkreis gegenüber dem Rad verhüten würde, ist es nötig, einen markanten Kragen rund um das Ventil herzustellen. Eine Herrichtung dieser Art wirkt jedoch einschränkend auf die freie Formgestaltung der Radzierkappe ein.

### Wesen der Erfindung

Die angeführten Mängel beseitigt eine Radzierkappe mit Zentrierelementen, für Fahrzeugräder, die auf der Nabe mittels Radbolzen montiert werden, deren Köpfe eine axiale Aussparung haben. Die Zentrierelemente sind von wenigstens einem Paar über der Rückseite der Radzierkappe hinausragende Nasen gebildet, die mit wenigstens einem Paar mit Aussparungen ausgestatteten Standardradbolzen gleichachsig sind. Wenigstens ein Teil der Außenfläche der Nasen ist in den axialen Aussparungen der Standardradbolzen einschiebbar.

Ein Vorteil der Radzierkappe gemäß der Erfindung besteht darin, dass sie die Möglichkeit, ein relativ großes, auch variables Axialspiel zwischen dem Kappenrand und der Radschüssel zu wählen ermöglicht und somit auch die Möglichkeit einteilige sowie zweiteilige Radbolzen, aber auch Standard- und Sicherheitsradbolzen aus dem Erstmontagekitt bei saisonbedingtem Wechsel von Alu- und Blechrädern zu benutzen. Die Konstruktion gemäß der Erfindung gewährleisteteine zuverlässige Mitnahme der Radzierkappe durch das Rad und ihr Tragen ohne Rutschen, sodass auch das Radventil durch Trägheitswirkung der Kappe an der Peripherie nicht belastet ist. Infolgedessen braucht die Radzierkappe auch keinen ansonsten nötigen optisch störenden Kragen.

In einer günstigen Ausführung bildet die Nase ein Ende der Schulter, die über die Rückseite der Radzierkappe herausragt.

Um die Wärmeübertragung vom dem Rad an die Radzierkappe zu minimieren ist es günstig die Nase aus wärmeisolierendem Material herzustellen und mittels eines Schaftes in die Schulter einsetzen.

Wegen leichter Montierbarkeit ist es günstig, wenn die Nasen wenigstens auf einem Teil der Außenfläche den gleichen umgeschriebenen Durchmesser haben wie die axialen Aussparungen im Standardradbolzen

Bei dem kombinierten Einsatz von Standard- und Sicherheitsradbolzen auf einem Rad ist es günstig, wenn der umgeschriebene Durchmesser der Nase kleiner ist als der eingeschriebene Durchmesser der Axialaussparung im Sicherheitsradbolzen. Die in die Axialeinsparung im Kopf des Sicherheitsradbolzens greifende Nase ist zwar an der Zentrierung der Kappe nicht beteiligt, hindert aber die weiteren Nasen nicht, die zusammen mit den Aussparungen im Standardradbolzen eingreifen, ihre Zentrierfunktion auszuüben.

Wegen leichter Montierbarkeit ist eine schräge und/oder gerundete Stirnfläche der Nase günstig.

Die Radzierkappe wird in ihrer axialen Endlage mittels federnder Finger festgestellt. Radial verteilt auf der Rückseite der Radzierkappe, springen diese in die Felgennute des Rades hinein . Für die Unterstützung der Federfinger und Stärkung ihrer Funktion ist die Einsetzung einer gemeinsamen Ringfeder günstig.

### Übersicht der Abbildungen der Zeichnung

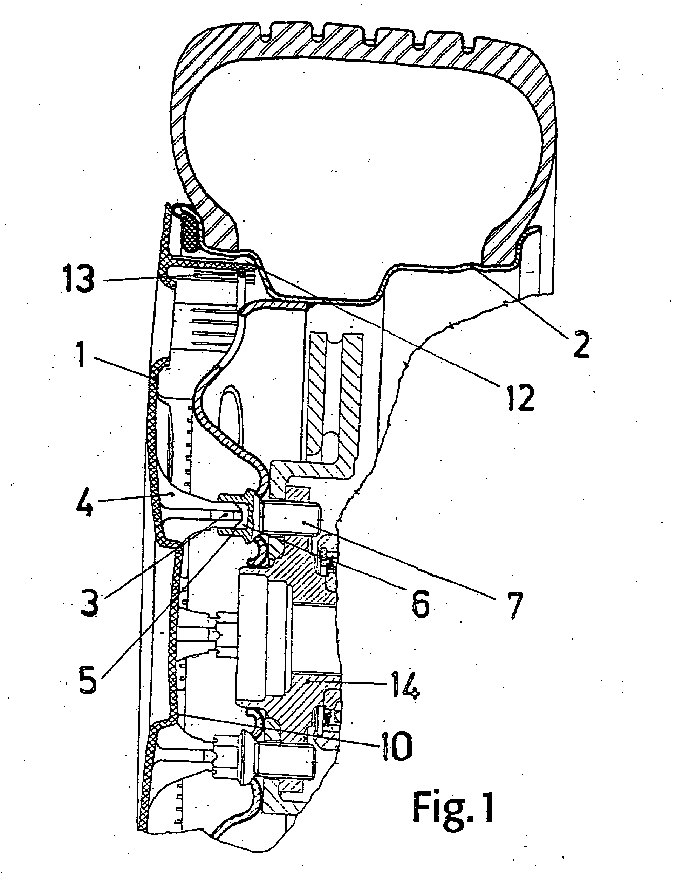

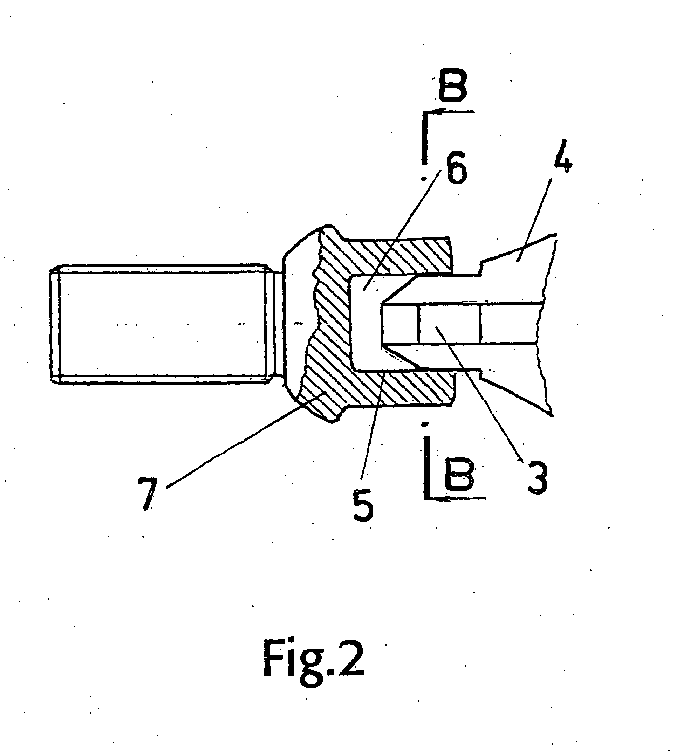

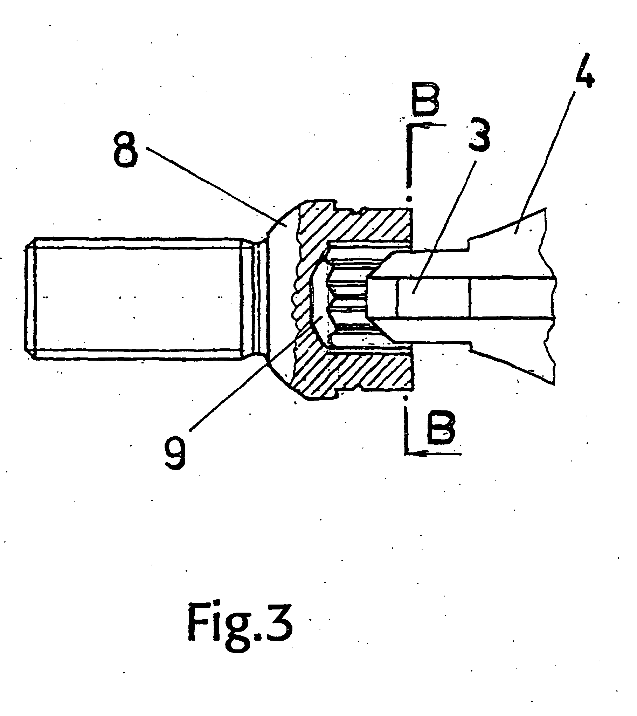

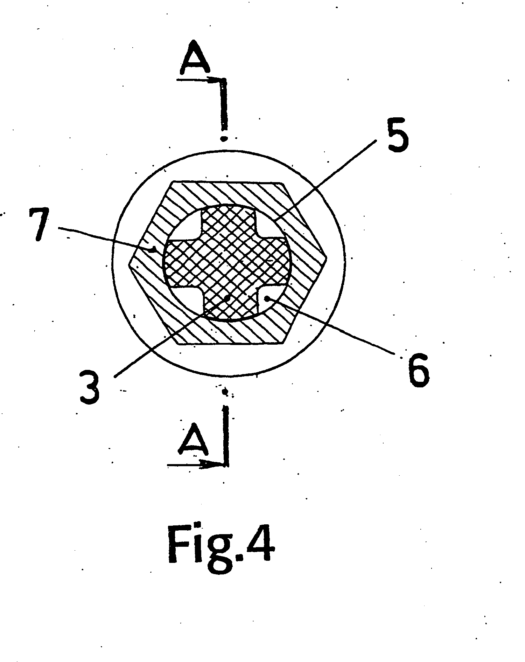

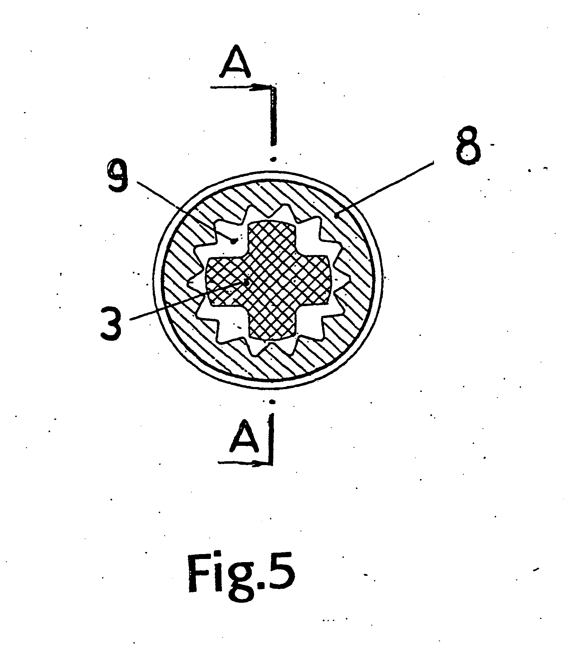

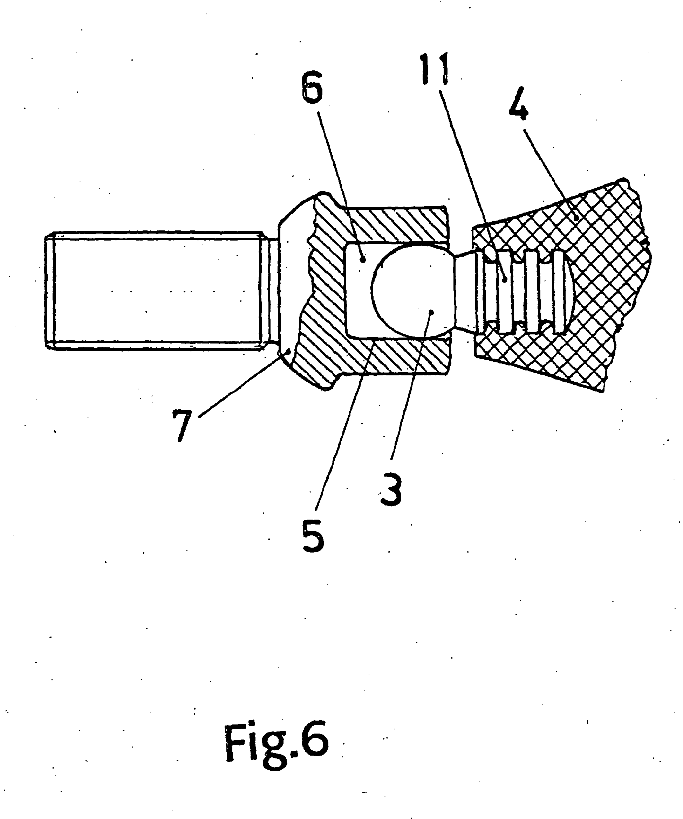

Die Abbildungen wollen die Erfindung näher erläutern. In Fig. 1 ist der Schnitt durch ein Rad mit Radzierkappe gemäß der Erfindung dargestellt. Die Radzierkappe ist in den axialen Aussparungen der Köpfe von Standardradbolzen festgemacht. In Fig. 2 ist ein Teillängsschnitt der axialen Aussparung im Standardradbolzenkopf mit eingerückter Nase der Radzierkappe dargestellt. In Fig. 3 ist ein Teillängsschnitt der axialen Aussparung im Sicherheitsradbolzenkopf mit eingerückter Nase der Radzierkappe gezeigt. Fig. 4 zeigt den Querschnitt der Ausführung aus Fig. 2, während Fig. 5 den Querschnitt der Ausführung aus Fig. 3 zeigt. In Fig. 6 ist ein Teillängsschnitt der axialen Aussparung im Standardradbolzenkopf mit eingerückter Nase aus wärmeisolierendem Material dargestellt.

### Beispiele von Erfindungsausführungen

In Fig. 1 ist ein Beispiel einer konkreten Ausführung der Radzierkappe 1 gemäß der Erfindung dargestellt. Die Radzierkappe ist auf einem kompletten Rad 2 angebracht. Teile des kompletten Rads, die zur Erläuterung der Erfindung nicht ausschlaggebend sind, wie Radschüssel, Reifen, Auswuchtgewichte, Feder und Ventil, sind mit den Bezugszeichen nicht versehen.

Das Rad 2 ist auf einer Nabe 14 einer Fahrzeugachse in bekannter Weise mit einer entsprechendnr Zahl Standardradbolzen 7 montiert. Köpfe der Standardradbolzen 7 sind in Achsrichtung mit einer Aussparung 6 ausgestattet. Die Aussparung 6 hat eine zylindrische Innenfläche 5.

Zentrierelemente der Radzierkappe 1 sind von Schultern 4 gebildet, deren maximale Zahl mit der Zahl der Radbolzen 7, 8 übereinstimmt. Die Schultern 4 ragen über die Rückseite der Radzierkappe 1 heraus, und zwar an den Axialaussparungen 6 in den Standardradbolzenköpfen 7 zugerechten Stellen. Jede Schulter 4 ist mit einer Nase 3 so beendet, dass der Schultersatz einschließlich der Nasen 3 ein ausgewogenes Ganzes gegenüber der Radachse bildet.

In der gezeigten Ausführung hat jede Nase 3 eine schräge Stirn (Fig. 2). Im Querschnitt ist sie kreuzförmig (Fig. 4). Der Querschnitt kann offensichtlich jede beliebige Form haben. Der maximale umgeschriebene Durchmesser der Außenfläche der Nase 3 muss mit dem Durchmesser der Zylinderinnenfläche 5 der Axialaussparung 6 im Standardradbolzen 7 übereinstimmen.

Das Anbringen der Radzierkappe 1 am Rad 2 wird durch die schräge Form der Nasenstirn 3 erleichtert. Diese ist bei Hineinschieben der Nase 3 in die Axialaussparung 6 der Standardradbolzen 7 behilflich. Nach Hineinbringen der Nase 3 in die Zylinderinnenfläche 5 der Axialaussparungen 6 im Standardradbolzen 7 kommt es zur vollkommenen Zentrierung der Radzierkappe 1 am Rad 2. Durch die Wahl der Länge der Wirkfläche der Nase 3 lässt sich auch die Axialspielgröße zwischen Radzierkappenrand 1 und Radschüssel 2 unproblematisch wählen. Das Axialspiel kann auch variabel sein. Eine axiale Endlage der Radzierkappe 1 wird beispielsweise durch Einrasten der Federfinger 12 der Radzierkappe 1 in die gerundete Felgennute des Rades 2 festgelegt (Fig. 1). Die Federfinger 12 ragen über die Rückseite 10 der Radzierkappe 1 hinaus. Ausgesetzt der Dauerbelastung kann sich das Material der Federfinger 12 entspannen und deswegen ist die Funktion der Federfinger 12 durch eine im Umkreis angebrachte Ringfeder 13 unterstützt.

Die in die Zylinderinnenfläche 5 der Axialaussparungen 6 in den Standardradbolzen 7 eingeschobenen Nasen 3 nehmen verlässlich die Radzierkappe 1 mit, sodass das Radventil 2 durch Trägheitswirkung der Radzierkappe 1 an der Peripherie nicht belastet ist und keinen ansonsten nötigen optisch störenden Kragen braucht.

Bei der Ausführung gemäss Fig. 1 ist gegenüber jeder Aussparung 6 im Standardradbolzen 7 eine Schulter 4 mit Nase 3 an der Radzierkappe 1 angeordnet. Für eine optimale Zentrierung der Radzierkappe 1 am Rad 2 ist auch eine kleinere Zahl der Nasen 3 natürlich hinreichend, zum Mindesten sind nur zwei Nasen 3 nötig.

Die Radzierkappe 1 gemäß der Erfindung ist auch an so einem Rad 2 einsetzbar, das neben Standardradbolzen 7 auch mit einem Sicherheitsradbolzen 8 befestigt ist. Der Sicherheitsradbolzen 8 verhütet das Lösen und somit auch die Entwendung des Rades 2. In der Praxis wird an jedem Rad 2 ein Sicherheitsradbolzen 8 eingesetzt. Anstelle eines Kopfes mit einem üblichen Greifsechskant hat der Sicherheitsradbolzen 8 eine axiale Aussparung 9 mit einer speziellen Innenverzahnung. Deswegen lässt sich der Sicherheitsradbolzen 8 nur mit einem entsprechenden Schlüssel lösen. Wie die Fig. 3 und 5 zeigen, ist der Innendurchmesser der Axialaussparung 9 im Kopf des Sicherheitsradbolzen 8 größer als der umgeschriebene Außendurchmesser der Nase 3. Die Nase 3 rückt zwar also in die axiale Aussparung 9 im Kopf des Sicherheitsradbolzen 8 ein, es kommt aber fast zu keinem Berührungskontakt zwischen der Nase 3 und der axialen Aussparung 9 im Kopf des Sicherheitsradbolzen 8. Die in die axiale Aussparung 9 im Kopf des Sicherheitsradbolzen 8 greifende Nase 3 beteiligt sich zwar an der Zentrierung der Radzierkappe nicht, verhindert jedoch auch nicht, dass die Zentrierung durch die weiteren Nasen 3, die mit den axialen Aussparungen 6 im Standardradbolzen 7 eingreifen, gewährleistet würde.

Bei der Ausführung in Fig. 1 ist die ganze Radzierkappe 1 einschließlich Schulter 4 und Nasen 3 aus einem aus Kunststoff geformten Integralteil hergestellt. Es sind aber auch andere Ausführungen möglich. Als Beispiel kann man die Ausführung in Fig. 6 nennen, die besonders für die Gebrauchsfälle, wo eine Reduzierung der Wärmeübertragung vom Rad 2 an die Radzierkappe 1 geboten ist, vorteilhaft ist. Bei dieser Ausführung ist die Nase 3 aus wärmeisolierendem Material hergestellt und mithilfe eines Schafts 11 in die entsprechende Schulter 4 eingesetzt.

Es ist daher klar, dass die einzige Bedingung, welche die Form der Nase 3 beschränkt, die Forderung nach wenigstens einer teilweisen Einschiebbarkeit der Nasen in die entsprechenden Form der Axialaussparung 6 im Standardradbolzen 7 ist. Die Nasen 3 und/oder die Schulter 4 können einen integralen Bestandteil der Radzierkappe 1 bilden oder auch in einer üblichen Weise daran angeschlossen sein, natürlich auch in einer zerlegbaren Variante.

### Liste der Bezugszeichen:

- 1: Radzierkappe
- 2: Rad
- 3: Nase
- 4: Schulter
- 5: Zylinderinnenfläche von der axialen, ursprünglich nur eine Entlastung herbeiführenden Aussparung im Kopf des Standardradbolzens
- 6: axiale Aussparung im Standardradbolzenkopf
- 7: Standardradbolzen
- 8: Sicherheitsradbolzen
- 9: axiale Aussparung im Kopf des Sicherheitsradbolzens mit Innenverzahnung
- 10: Rückseite der Radzierkappe
- 11: Schaft der Nase aus wärmeisolierendem Material
- 12: Federfinger
- 13: Ringfeder
- 14: Nabe der Fahrzeugachse

## Patentansprüche

1. Radzierkappe (1) mit Zentrierelementen, für Fahrzeugräder (2), die auf einer Nabe (14) mittels Radbolzen (7,8) montiert werden, deren Köpfe eine axiale Aussparung (6,9) haben, **dadurch gekennzeichnet, dass** die Zentrierelemente von wenigstens einem Paar über der Rückseite (10) der Radzierkappe (1) hinausragende Nasen (3) gebildet sind, die mit wenigstens einem Paar mit Aussparungen (6) ausgestatteten Standardradbolzen (7) gleichachsig sind, wobei wenigstens ein Teil der Außenfläche der Nasen (3) in die axiale Aussparungen (6) der Standardradbolzen (7) einschiebbar ist.

2. Radzierkappe (1) nach Anspruch 1, **dadurch gekennzeichnet, dass** die Nasen (3) die Enden von Schultern (4) bilden, die über die Rückseite der Radzierkappe (1) herausragen.

3. Radzierkappe (1) nach Anspruch 2 **dadurch gekennzeichnet, dass** die Nasen (3) aus wärmeisolierendem Material hergestellt und mittels eines Schaftes (11) in die Schultern (4) eingesetzt sind.

4. Radzierkappe (1) nach einem der Ansprüche 1 bis 3, **dadurch gekennzeichnet, dass** die Nasen (3) wenigstens auf einem Teil der Außenfläche den gleichen umgeschriebenen Durchmesser haben wie die axialen Aussparungen (6) im Standardradbolzen (7).

5. Radzierkappe (1) nach einem der Ansprüche 1 bis 4, **dadurch gekennzeichnet, dass** die Nasen (3) einen kleineren Außendurchmesser haben, als die axialen Aussparungen (9) in den Sicherheitsradbolzen (8).

6. Radzierkappe (1) nach einem der Ansprüche 1 bis 5, **dadurch gekennzeichnet, dass** die Nasen (3) eine schräge und/oder gerundete Stirn haben.

7. Radzierkappe (1) nach einem der Ansprüche 1 bis 6, **dadurch gekennzeichnet, dass** über die Rückseite (10) der Radzierkappe (1) Federfinger (12) für das Einspringen in die Felgennute herausragen, wobei eine Ringfeder (13) über die Federfinger (12) abgelegt ist.

## Claims

1. Ornamental hub cap (1) with centring elements, for vehicle wheels (2) which are fitted on a hub (14) by means of wheel bolts (7,8), the heads of which have an axial recess (6,9), **characterized in that** the centring elements are formed by at least one pair of lugs (3) which project over the rear side (10) of the ornamental hub cap (1) and are coaxial with at least one pair of standard wheel bolts (7) equipped with recesses (6), with it being possible for at least part of the outer surface of the lugs (3) to be pushed into the axial recesses (6) of the standard wheel bolts (7).

2. Ornamental hub cap (1) according to Claim 1, **characterized in that** the lugs (3) form the ends of shoulders (4) which project over the rear side of the ornamental hub cap (1).

3. Ornamental hub cap (1) according to Claim 2, **characterized in that** the lugs (3) are produced from heat-insulating material and are inserted by means of a stem (11) into the shoulders (4).

4. Ornamental hub cap (1) according to one of Claims 1 to 3, **characterized in that**, at least over part of the outer surface, the lugs (3) have the same circumscribed diameter as the axial recesses (6) in the standard wheel bolt (7).

5. Ornamental hub cap (1) according to one of Claims 1 to 4, **characterized in that** the lugs (3) have a smaller outside diameter than the axial recesses (9) in the safety wheel bolts (8).

6. Ornamental hub cap (1) according to one of Claims 1 to 5, **characterized in that** the lugs (3) have an oblique and/or rounded front.

7. Ornamental hub cap (1) according to one of Claims 1 to 6, **characterized in that** spring fingers (12) for springing into the rim grooves protrude over the rear side (10) of the ornamental hub cap (1), with an annular spring (13) being placed over the spring fingers (12).

## Revendications

1. Enjoliveur de roue (1) avec des éléments de centrage, pour des roues de véhicule (2) montées sur un moyeu (14) à l'aide de boulons de roue (7, 8) dont les têtes comportent un évidement (6,9) axial, **caractérisé en ce que** les éléments de centrage sont formés par au moins une paire d'ergots (3) saillant hors du côté arrière (10) de l'enjoliveur de roue (1), lesdits ergots étant sur le même axe avec au moins une paire de boulons de roue standard (7) pourvus d'évidements (6), au moins une partie de la surface extérieure des ergots (3) pouvant être introduite dans les évidements (6) axiaux des boulons de roue standard (7).

2. Enjoliveur de roue (1) selon la revendication 1, **caractérisé en ce que** les ergots (3) forment les extrémités des épaulements (4) saillant hors du côté arrière de l'enjoliveur de roue (1).

3. Enjoliveur de roue (1) selon la revendication 2, **caractérisé en ce que** les ergots (3) sont fabriqués en matériau thermo-isolant et sont placés dans l'épaulement (4) à l'aide d'une tige (11).

4. Enjoliveur de roue (1) selon l'une quelconque des revendications 1 à 3, **caractérisé en ce que** les ergots (3) ont au moins sur une partie de la surface extérieure le même diamètre transféré que les évidements (6) axiaux dans les boulons de roue standard (7).

5. Enjoliveur de roue (1) selon l'une quelconque des revendications 1 à 4, **caractérisé en ce que** les ergots (3) ont un plus petit diamètre extérieur que les évidements (9) axiaux dans les boulons de roue de sécurité (8).

6. Enjoliveur de roue (1) selon l'une quelconque des revendications 1 à 5, **caractérisé en ce que** les ergots (3) ont une face frontale oblique et/ou arrondie.

7. Enjoliveur de roue (1) selon l'une quelconque des revendications 1 à 6, **caractérisé en ce qu'**un doigt de ressort (12) ressort du côté arrière (10) de l'enjoliveur de roue (1) pour sauter dans les rainures de jante, un ressort annulaire (13) étant disposé au-dessus du doigt de ressort (12).
